(19) Europäisches Patentamt
European Patent Office
Office européen des brevets

(11) Veröffentlichungsnummer: **0 122 477**
**B1**

(12) **EUROPÄISCHE PATENTSCHRIFT**

(45) Veröffentlichungstag der Patentschrift:
**11.06.86**

(51) Int. Cl.⁴: **B 65 B 9/20**

(21) Anmeldenummer: **84102884.8**

(22) Anmeldetag: **16.03.84**

(54) Vorrichtung zum paarweisen Herstellen von Beutelpackungen.

(30) Priorität: **08.04.83 DE 3312653**

(43) Veröffentlichungstag der Anmeldung:
**24.10.84 Patentblatt 84/43**

(45) Bekanntmachung des Hinweises auf die Patenterteilung:
**11.06.86 Patentblatt 86/24**

(84) Benannte Vertragsstaaten:
**CH DE GB IT LI NL**

(56) Entgegenhaltungen:
**DE - A - 1 461 916**
**DE - A - 1 586 118**

(73) Patentinhaber: **ROBERT BOSCH GMBH, Postfach 50, D-7000 Stuttgart 1 (DE)**

(72) Erfinder: **Auer, Hugo, Alte Landstrasse 12, A-6130 Schwaz (AT)**

LIBER, STOCKHOLM 1986

## Beschreibung

### Stand der Technik

Die Erfindung geht aus von einer Vorrichtung zum paarweisen Herstellen von Beutelpackungen nach der Gattung des Hauptanspruchs. Bei einer beispielsweise durch die DE-OS 15 86 118 bekannten Schlauchbeutelherstellvorrichtung dieser Art sind beide Querverschlußeinrichtungen auf einem gemeinsamen, von der Antriebseinrichtung auf- und abbewegten Träger angeordnet. Diese Anordnung hat zur Folge, daß bei einer Störung in einer der beiden Schlauchbeutelformeinrichtungen oder zum Einlegen einer neuen Packstoffbahn jeweils beide Schlauchbeutelformeinrichtungen stillgesetzt werden müssen. Es ist daher eine Schlauchbeutelherstellvorrichtung erstrebenswert, deren beide Schlauchbeutelformeinrichtungen unabhängig voneinander betrieben werden können.

### Vorteile der Erfindung

Die erfindungsgemäße Vorrichtung zum paarweisen Herstellen von Beutelpackungen mit den kennzeichnenden Merkmalen des Hauptanspruchs hat gegenüber bekannten Vorrichtungen dieser Art eine höhere Produktivität. Die erhöhte Produktivität zeigt sich nicht nur darin, daß die nicht gestörte Schlauchbeutelformeinrichtung während einer Störung der anderen Schlauchbeutelformeinrichtung weiterläuft, sondern insbesondere auch darin, daß ein wiederholtes Anfahren und Stillsetzen, vermieden wird, wie dies erfahrungsgemäß nach einem Stillstand erforderlich ist. Als weiterer Vorteil ist anzusehen, daß die Gefahr von Störungen beim Stillsetzen und Wiederanfahren gemindert ist. Hinzu kommt, daß das Fertigen von Beutelpackungen mit schlechten Schweißnähten und das Herstellen von Leerbeuteln, wie dies bei jedem Wiederanfahren üblich ist, stark reduziert wird. Dadurch ergibt sich auch der Vorteil eines geringen Packstoffverbrauches.

Durch die in den Unteransprüchen aufgeführten Maßnahmen sind vorteilhafte Weiterbildungen und Verbesserungen der im Hauptanspruch angegebenen Vorrichtung möglich.

### Zeichnung

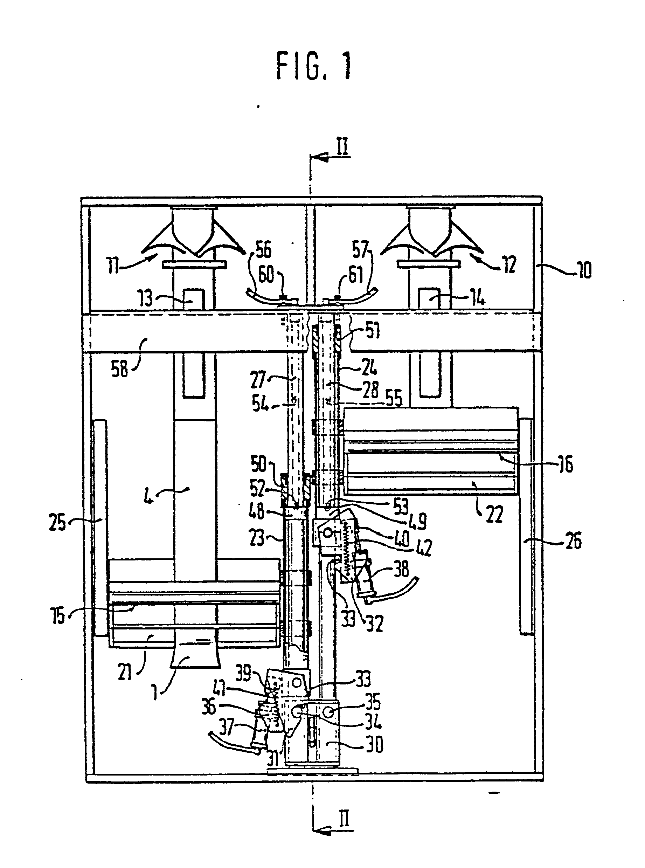

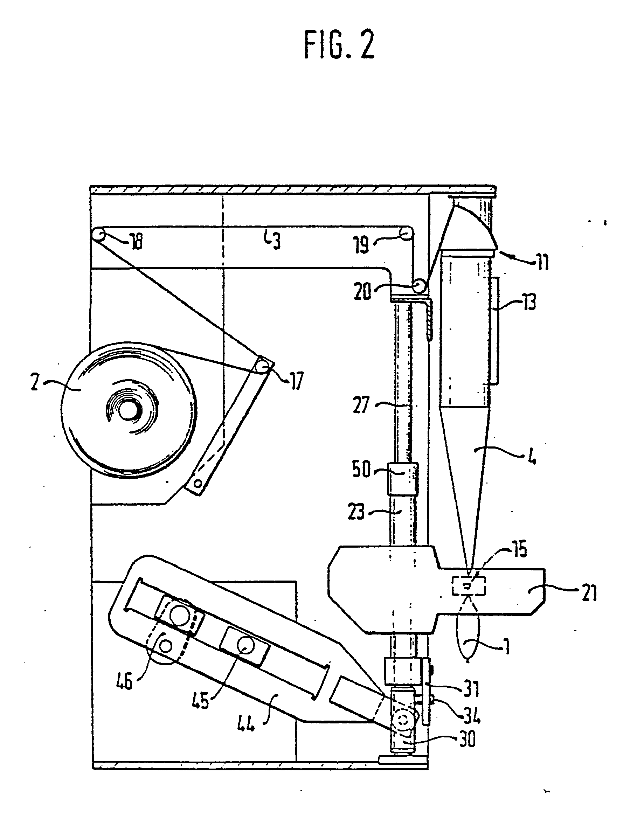

Ein Ausführungsbeispiel der Erfindung ist in der Zeichnung dargestellt und in der nachfolgenden Beschreibung näher erläutert. Es zeigen Figur 1 eine Schlauchbeutelherstellvorrichtung in Vorderansicht teilweise im Schnitt und Figur 2 die Schlauchbeutelherstellvorrichtung nach Figur 1 im Querschnitt in der Ebene II-II der Figur 1.

### Beschreibung des Ausführungsbeispiels

In einem symmetrisch aufgebauten Maschinengestell 10 sind parallel nebeneinander zwei Schlauchformer 11, 12 und Längsnahtschweißbacken 13, 14 angeordnet. Unterhalb der Schlauchformer 11, 12 sind in axialer Ausrichtung zu diesen je eine Querverschlußeinrichtung 15, 16 auf- und abbewegbar. Von Vorratsrollen 2 werden Packstoffbahnen 3 über Führungsrollen 17 bis 20 den Schlauchformern 11, 12 zugeleitet, die die Packstoffbahnen 3 zu Schläuchen 4 umformen. Die taktweise auf- und abbewegbaren Querverschlußeinrichtungen 15, 16 ergreifen in ihrer oberen Totlage jeweils den unteren Abschnitt der Schläuche 4, pressen diese zusammen und ziehen die Schläuche 4 um jeweils eine Beutellänge nach unten. Dabei bilden Sie an den mit Gut gefüllten unteren Schlauchabschnitten jeweils eine Kopfnaht und darüber eine Bodennaht. Durch einen Trennschnitt zwischen diesen beiden Nähten wird jeweils eine fertige Beutelpackung 1 freigegeben.

Jede der beiden Querverschlußeinrichtungen 15, 16 ist an einem eigenen Träger 21, 22 angeordnet. Die beiden Träger 21, 22 sind zur Mitte des Maschinengestells 10 hin an je einer Führungshülse 23, 24 befestigt und werden nach außen in einer Geradführung 25, 26 geführt. Jede Führungshülse 23, 24 ist auf einer senkrecht angeordneten, ortsfesten Führungsstange 27, 28 auf- und abverschiebbar gelagert. Unterhalb der beiden Führungshülsen 23, 24 ist auf den Führungsstangen 27, 28 ein Schlitten 30 auf- und abverschiebbar gelagert.

Zum Ankuppeln jeweils eines Träger 21, 22 an den auf- und abbewegbaren Schlitten 30 ist am unteren Ende jeder Führungshülse 23, 24 je eine Klinke 31, 32 schwenkbar gelagert. Die Klinken 31, 32 haben eine Aussparung 33, mit der sie Zapfen 34, 35 am Schlitten 30 umgreifen können. Zum In-Eingriff-Halten der Klinken 31, 32 mit den Zapfen 34, 35 des Schlittens 30 sind an den beiden Klinken 31, 32 und an Armen 36, die am unteren Ende der Führungshülsen 23, 24 nach unten abstehen, Zugfedern 41, 42 eingehängt.

Zum Lösen der Klinken 31, 32 vom auf- und abbewegten Schlitten 30 ist an jedem der Arme 36 ein einfachwirkender, pneumatischer Arbeitszylinder 37, 38 angeordnet, deren Kolbenstangen 39, 40 an den zugehörigen Klinken 31, 32 angelenkt sind. Der Schlitten 30 ist an einem Ende einer Schwinge 44 angelenkt, die um einen Drehpunkt 45 schwenkbar gelagert ist und von einem Kurbelgetriebe 46 in vertikaler Ebene in eine taktweise Auf- und Abbewegung versetzt wird, wobei, wenn die beiden Klinken 31, 32 in den Zapfen 34, 35 des Schlittens 30 eingerastet sind, die beiden Träger 21, 22 um jeweils eine Beutellänge auf- und abbewegt werden.

Im Falle einer Störung eines der beiden Schlauchbeutelformeinrichtungen kann der zugehörige Träger 21 oder 22 in Stillstand versetzt werden, ohne daß der Träger der anderen Schlauchbeutelformeinrichtung stillgesetzt wird. Dies geschieht durch Beaufschlagen des betreffenden Arbeitszylinders 37 oder 38 mit Druckluft über nicht dargestellte Ventile. Das Lösen der Antriebsverbindung durch Verschwenken der Klinke 31 oder 32 zum Außer-Eingriff-Bringen deren Aussparung 33 mit dem betreffenden Zapfen 34 oder 35 am Schlitten 30 kann allerdings nur in der oberen Totpunktlage des Schlittens 30 erfolgen (Figur 1 rechte Seite)

Um den Träger in der oberen Stellung zu halten und um die Aufwärtsbewegung der Träger 21, 22 bei jedem Hub zu unterstützen, sind die Führungshülsen 23, 24 und die ortsfesten Führungsstangen 27, 28 als einfachwirkende, pneumatische Arbeitszylinder ausgebildet. Dazu haben die Führungsstangen 27, 28 etwa in ihrer Mitte einen Kolben 48, 49, dessen Durchmesser der Innenweite der Führungshülsen 23, 24 entspricht, und die Führungshülsen 23, 24 einen oberen Zylinderkopf 50, 51, der auf dem oberen Teil der Führungsstangen 27, 28 gleitet. Wenig oberhalb der Kolben 48, 49 mündet eine Querbohrung 52, 53, welche über je eine Längsbohrung 54, 55 im oberen Teil der Führungsstangen 27, 28 und einen flexiblen Schlauch 56, 57 mit einem Druckluftvorrat verbindbar sind. In die Druckluftzuleitung sind ferner nicht dargestellte Ventile geschaltet, welche im unteren Totpunkt des Schlittens 30 geöffnet und in dessen oberem Totpunkt wieder geschlossen werden. Beim Öffnen der Ventile strömt Druckluft in die Führungshülsen 23, 24 ein und drängt diese nach oben. Dieser Druckluftantrieb unterstützt den mechanischen Antrieb des Kurbelgetriebes 46 und der Schwinge 44 beim Heben der Träger 21, 22, wobei jedoch der Bewegungsablauf durch den mechanischen Antrieb bestimmt wird. Damit die obere Stellung eines vom Antrieb entkuppelten Trägers 21, 22 genau fixiert werden kann, was für das Wiederankuppeln durch die Klinken 31, 32 sehr wichtig ist, befinden sich an einer oberen Traverse 58 des Maschinengestells 10 einstellbare Anschlagschrauben 60, 61 für die Führungshülsen 23, 24.

Der Stillstand eines der beiden Träger 21, 22 bleibt solange aufrechterhalten, bis das zugehörige Schaltventil wieder umgestellt wird. Der Zeitpunkt der Ventilbetätigung kann beliebig sein, denn eine vom Hauptantrieb abhängige Steuerung sorgt dafür, daß das Ein-bzw. Auskuppeln eines Trägers 21, 22 mit dem Schlitten 30 nur im oberen Totpunkt geschieht.

**Patentansprüche**

1. Vorrichtung zum paarweisen Herstellen von Beutelpackungen mit zwei nebeneinander angeordneten Schlauchformeinrichtungen und mit zwei die beiden Packstoffschläuche taktweise um jeweils eine Beutellänge vorziehenden Querverschlußeinrichtungen, welche die beiden Schläuche jeweils in einer oberen Stellung ergreifen und in einer unteren Stellung jeweils eine Beutelpackung abtrennen, und die mittels einer gemeinsamen Antriebseinrichtung taktweise auf und ab bewegt werden, dadurch gekennzeichnet, daß die Querverschlußeinrichtungen (15, 16) auf getrennten Trägern (21, 22) angeordnet sind, und daß jeder der beiden Träger mit einem von der Antriebseinrichtung auf- und abbewegten Hubelement (30) kuppelbar eingerichtet sind.

2. Vorrichtung nach Anspruch 1, dadurch gekennzeichnet, daß die Träger (21, 22) mittels je eines formschlüssigen Kupplungsgliedes (31, 32) mit dem Hubelement (30) verbindbar sind.

3. Vorrichtung nach Anspruch 2, dadurch gekennzeichnet, daß die Kupplungsglieder die Form einer Klinke (31, 32) aufweisen.

4. Vorrichtung nach Anspruch 2, dadurch gekennzeichnet, daß jede Klinke (31, 32) mittels eines fluidischen Arbeitszylinders (37, 38) betätigbar ist.

5. Vorrichtung nach Anspruch 4, dadurch gekennzeichnet, daß die Arbeitszylinder (37, 38) lediglich in der oberen Stellung des Hubelements (30) betätigbar sind.

6. Vorrichtung nach einem der Ansprüche 1 bis 5, dadurch gekennzeichnet, daß das Hubelement (30) auf zwei parallelen Führungsstangen (27, 28) gleitend geführt ist, welche je einen Kolben (48, 49) für als fluidische Arbeitszylinder ausgebildete Führungshülsen (23, 24) haben, die mit je einem der Träger (21, 22) der Querverschlußeinrichtungen (15, 16) fest verbunden sind.

**Claims**

1. Device for the manufacture of bag packages in pairs having two parison-forming devices arranged next to one another and having two transverse sealing devices which pull the two packing material parisons forward in cycles in each case.by one bag length, grip the two parisons in each case in an upper position and in a lower position separate off in each case one bag package, and which are moved up and down in cycles by means of a common drive device, characterised in that the transverse sealing devices (15, 16) are arranged on separate supports (21, 22), and that each of the two supports are installed in such a way that they can be coupled to a lifting element (30) which is moved up and down by the drive device.

2. Device according to Claim 1, characterised in that the supports (21, 22) can be connected to the lifting element (30) in each case by means of a positive-locking coupling member (31, 32).

3. Device according to Claim 2, characterised in that the coupling members have the form of a catch (31, 32).

4. Device according to Claim 2, characterised in that each catch (31, 32) can be actuated by means of a fluidic operating cylinder (37, 38).

5. Device according to Claim 4, characterised in that the operating cylinders (37, 38) can be actuated only in the upper position of the lifting element (30).

6. Device according to one of Claims 1 to 5, characterised in that the lifting element (30) is guided in sliding manner on two parallel guide bars (27, 28) which have in each case one piston (48, 49) for guide sleeves (23, 24) which are designed as fluidic operating cylinders and which are firmly connected in each case to one of the supports (21, 22) of the transverse sealing devices (15, 16).

**Revendications**

1°) Dispositif pour la fabrication par paires d'emballages sous forme de sacs, comportant deux dispositifs de formage de tubes montés à côté l'un de l'autre et comportant deux dispositifs de fermeture transversale tirant en avant les deux tuyaux de matière d'emballage périodiquement chaque fois d'une longueur de sac, dispositifs de fermeture qui saisissent les deux tuyaux chaque fois dans une position supérieure et dans une position inférieure séparant chaque fois un emballage sous forme de sac, et qui sont déplacés de haut en bas périodiquement au moyen d'un dispositif d'entraînement commun, dispositif de fabrication caractérisé en ce que les dispositifs de fermeture transversale (15, 16) sont montés sur des supports séparés (21, 22) et en ce que chacun des deux supports est monté de façon à s'accoupler avec un élément de levage (30) déplacé de haut en bas par le dispositif d'entraînement.

2°) Dispositif selon la revendication 1, caractérisé en ce que les supports (21, 22) se relient chacun à l'élément de levage (30) au moyen d'un organe d'accouplement mécanique (31, 32).

3°) Dispositif selon la revendication 2, caractérisé en ce que les organes d'accouplement présentent la forme d'un cliquet (31, 32).

4°) Dispositif selon la revendication 2, caractérisé en ce que chaque cliquet (31, 32) s'actionne au moyen d'un cylindre de travail (37, 38) à fluide.

5°) Dispositif selon la revendication 4, caractérisé en ce que les cylindres de travail (37, 38) s'actionnent uniquement dans la position supérieure de l'élément de levage (30).

6°) Dispositif selon l'une des revendications 1 à 5, caractérisé en ce que l'élément de levage (30) est guidé de façon à coulisser sur deux tiges de guidage parallèles (27, 28) qui comportent, chacune, un piston (48, 49) pour des manchons de guidage (23, 24) constitués sous forme de cylindres de travail à fluide, lesquels sont solidaires chacun de l'un des supports (21, 22) des dispositifs de fermeture transversale.

# FIG. 1

# FIG. 2